# EUROPÄISCHE PATENTANMELDUNG

(11) **EP 3 786 616 A1**
(43) Veröffentlichungstag der Anmeldung: **03.03.2021**
(21) Anmeldenummer: 19194295.2
(22) Anmeldetag: 29.08.2019
(51) Int. Cl.: G01N 21/17

(54) **MEMS BASIERTE PHOTOAKUSTISCHE ZELLE**

(71) Anmelder: Hahn-Schickard-Gesellschaft für angewandte Forschung e.V., 78052 Villingen-Schwenningen (DE)
(72) Erfinder: Bittner, Achim, 74080 Heilbronn (DE); Dehé, Alfons, 72770 Reutlingen (DE); Castellanos, Lenny, 78727 Oberndorf am Neckar (DE)
(74) Vertreter: Hertin und Partner Rechts- und Patentanwälte PartG mbB

(57) **Zusammenfassung**

Die Erfindung betrifft in einem ersten Aspekt einen photoakustischen Gassensor mit einer mit Gas befüllbaren Detektionskammer und einer Referenzkammer die lateral nebeneinander angeordnet sind und durch einen Sensorkanal verbunden werden, in der ein MEMS-Sensor vorliegt. Beide Kammern liegen in einer Ebene senkrecht zur emittierten IR-Strahlung des ebenso umfassten IR-Emitters. Der Gassensor ist außerdem aus einem mehrlagigen Substrat gebildet.

In weiteren Aspekten betrifft die Erfindung ebenfalls ein Herstellungsverfahren für einen Gassensor und ein Verfahren zur Analyse von Gas mit einem Gassensor.

## Beschreibung

Die Erfindung betrifft in einem ersten Aspekt einen photoakustischen Gassensor mit einer mit Gas befüllbaren Detektionskammer und einer Referenzkammer die lateral nebeneinander angeordnet sind und durch einen Sensorkanal verbunden werden, in der ein MEMS-Sensor vorliegt. Beide Kammern liegen in einer Ebene senkrecht zur emittierten IR-Strahlung des ebenso umfassten IR-Emitters. Der Gassensor ist außerdem aus einem mehrlagigen Substrat gebildet.

In weiteren Aspekten betrifft die Erfindung ein Herstellungsverfahren für einen Gassensor und ein Verfahren zur Analyse von Gas mit einem Gassensor.

### Hintergrund und Stand der Technik

Die photoakustische Spektroskopie (PAS) erlaubt die Detektion feinster Konzentrationen von Gasen und hat eine Vielzahl von Anwendungen. Beispielhaft ist die Detektion von CO₂, welche in der Forschung und der Klimatechnik eine Rolle spielt. Auch die Konzentration z. B. von Abgasen in der Luft kann so gemessen werden. Ebenso sind militärische Anwendungen relevant, bei denen kleinste Konzentrationen von Giftgas detektiert werden können.

Bei der photoakustischen Spektroskopie wird intensitätsmodulierte Infrarotstrahlung mit Frequenzen im Absorptionsspektrum eines in einem Gas zu detektierenden Moleküls eingesetzt. Ist dieses Molekül im Strahlengang vorhanden, findet eine modulierte Absorption statt, die zu Erwärmungs- und Abkühlungsprozessen führt, deren Zeitskalen die Modulationsfrequenz der Strahlung widerspiegeln. Die Erwärmungs- und Abkühlungsprozesse führen zu Expansionen und Kontraktion des Gases, wodurch Schallwellen mit der Modulationsfrequenz verursacht werden. Diese lassen dann sich durch Schalldetektoren, wie beispielsweise Mikrofone, oder Flusssensoren messen.

Photoakustische Gassensoren bestehen aus den Komponenten Emitter, Detektor und Zelle. Es können auch mehrere Zellen vorhanden sein. Die Zelle wird meistens aus Stahl mesoskopisch als Zylinder ausgeführt, siehe z. B. [1] sowie US 2018 005 9066 A1.Dies verhindert eine weitere Miniaturisierung.

Aus dem Stand der Technik sind auch Bestrebungen für eine Miniaturisierung bekannt. Beispielswiese wird in der DE 20 2015 002 315 ein vertikal integriertes MEMS System vorgeschlagen, welche zwei oder mehr Zellen vertikal übereinander in Strahlungsrichtung eines IR-Emitters aufweist. Eine derartige vertikale Anordnung hat jedoch unterschiedliche Nachteile So kann es zu einer Beeinflussung des Detektors und der zweiten Zelle durch die IR-Bestrahlung kommen, weil diese ebenfalls in Strahlungsrichtung angeordnet sind. Dies betrifft insbesondere die IR Strahlung, die nicht im Medium der ersten Zelle absorbiert werden kann und somit in die zweite Zelle (idR die Referenzkammer) eindringt und dort ein unerwünschtes Signal produziert. Auch der Detektor/Sensor selber kann Wärme der Strahlung aufnehmen und dadurch verfälscht werden.

Ein photoakustischer Gassensor, ohne diese Nachteile und welcher komplett in MEMS Technologie hergestellt wird, ist bislang unbekannt.

### Aufgabe der Erfindung

Aufgabe der Erfindung ist es, einen Gassensor in Form eines photoakustischen Spektroskops sowie ein Verfahren zur Gasmessung sowie ein Herstellungsverfahren für Gassensoren ohne die Nachteile des Standes bereitzustellen. Insbesondere war es eine Aufgabe der Erfindung, einen verbesserten Gassensor basierend auf einem photoakustischen Spektroskop zur Verfügung zu stellen, welcher kompakt, robust und mit hoher Sensibilität und Genauigkeit eine Gaskonzentration messen kann und sich gleichzeitig durch einen einfaches, kostengünstiges, massentaugliches Herstellungsverfahren auszeichnet, bei dem alle Komponenten in nur wenigen Schritten und direkt integriert gefertigt werden können.

### Zusammenfassung der Erfindung

Die Aufgabe wird durch die Merkmale der unabhängigen Ansprüche gelöst. Bevorzugte Ausführungsformen der Erfindung sind in den abhängigen Ansprüchen beschrieben.

In einem ersten Aspekt betrifft die Erfindung einen photoakustischen Gassensor, umfassend
- einen modulierbaren Infrarot-Emitter,
- eine mit Gas befüllbare Detektionskammer,
- eine Referenzkammer,
- ein Sensorkanal, welcher die Detektionskammer mit der Referenzkammer verbindet sowie
- einen MEMS-Sensor, welcher sich im Sensorkanal befindet,
wobei die Detektionskammer im Strahlengang des Infrarot-Emitters vorliegt, sodass der Infrarot-Emitter mittels modulierbar emittierbarer Infrarotstrahlung Gas in der Detektionskammer zur Ausbildung von Schalldruckwellen anregen kann, welche mit Hilfe des MEMS-Sensors im Sensorkanal detektierbar sind, wobei die Detektionskammer, der Sensorkanal, die Referenzkammer sowie der MEMS-Sensor in einem mehrlagigen Substrat gebildet werden und in einer lateralen Ebene angeordnet vorliegen, welche im Wesentlichen senkrecht zur Strahlungsrichtung des IR-Emitters verläuft.

Bei diesem Gassensor sind Detektionskammer und Referenzkammer in einer Ebene nebeneinander und senkrecht zur Strahlungsrichtung des IR-Emitters angeordnet und in einem mehrlagigen Substrat gebildet. Durch diese Anordnung und die Verwendung eines MEMS-Sensors im zwischen den Kammern liegenden Sensorkanal kann eine einfache Herstellungsweise und kompakte Bauform mit niedriger Bauhöhe erreicht werden.

Dadurch, dass Detektionskammer und Referenzkammer lateral nebeneinander angeordnet sind und die Strahlung des IR-Emitters im Wesentlichen senkrecht zu dieser Anordnungsebene ausgerichtet ist, kann bei gleichzeitiger Fokussierung des Strahls auf die Detektionskammer insbesondere erreicht werden, dass nur die Detektionskammer und nicht die Referenzkammer bestrahlt wird. Findet daraufhin in der Detektionskammer aufgrund eines vorhandenen Gasbestandteils eine modulierte Absorption statt, wird über den Sensorkanal ein Druckausgleich zur bevorzugt nicht bestrahlten Referenzkammer hergestellt, der durch den MEMS-Sensor im Sensorkanal vermessen werden kann. Hierdurch können Störeinflüsse vermieden und die Sensibilität erhöht werden.

Durch den kompakten Aufbau in einem mehrlagigen Substrat mit einem MEMS-Sensor kann eine integrierte Bauweise umfassend die wesentlichen Komponenten des Gassensors erreicht werden. Dieser kann dabei auch stark miniaturisiert sein. Die Verwirklichung in einem mehrlagigen Substrat vereinfacht das Herstellungsverfahren. Vorteilhafterweise können hierbei standardisierte Herstellungsverfahren der Halbleiter und/oder MEMS-Herstellung herangezogen werden. Durch den MEMS-Sensor können die Abmessungen insbesondere des Sensorkanals unabhängig von der Größe der übrigen Komponenten des Gassensors gewählt und auf bestimmte Anforderungen, z. B. eine gewünschte Sensitivität des MEMS-Sensors bezüglich der Druckänderungen in der Detektionskammer angepasst werden.

Verschiedene Infrarot (IR) Emitter kommen bevorzugt als Strahlungsquelle für die genannten Anwendungen in Frage. Es können beispielsweise schmalbandige Laserquellen im Infrarotbereich verwendet werden. Diese erlauben vorteilhafterweise die Verwendung hoher Strahlungsintensitäten und können mit Standardkomponenten für die photoakustische Spektroskopie vorzugsweise hochfrequent moduliert werden. Jedoch sind durch das schmale Spektrum des Lasers nur jene Moleküle detektierbar, welche ein entsprechendes Absorptionsspektrum aufweisen. Daher werden bevorzugt mehrere Laser verwendet, falls verschiedene Moleküle detektiert werden sollen.

Der IR-Emitter ist vorzugsweise in einer linearen Anordnung zur Detektionskammer angeordnet. Das bedeutet bevorzugt, dass der IR-Emitter von einem Punkt auf der Verbindungslinie zwischen Detektionskammer und Referenzkammer in einem rechten Winkel zur Verbindungslinie angeordnet ist. Der IR-Emitter kann bevorzugt direkt an die Detektionskammer und/oder die Referenzkammer angrenzen und diese bestrahlen. Es kann jedoch auch bevorzugt sein, dass zwischen IR-Emitter und Detektionskammer und/oder Referenzkammer ein freier Bereich angeordnet ist, in dem der IR-Strahl eine Freistrahlstrecke durchquert.

Bevorzugt können ebenso thermische, breitbandige Emitter verwendet werden. Diese weisen vorteilhafterweise ein breites Spektrum auf, welches sich z. B. durch den Einsatz von (durchstimmbaren) Filtern weiter selektieren lässt. Aufgrund thermischer Zeitkonstanten liegt die Modulationsfrequenz bei einer direkten Modulation vorzugsweise im Bereich von einigen Hz bis ca. 100 Hz.

Ein modulierbarer Infrarot-Emitter bezeichnet bevorzugt eine Vorrichtung, die elektromagnetische Strahlung in einem Wellenlängenbereich im Infrarot (IR) Bereich aussendet, insbesondere zwischen ca. 700 Nanometer (nm) und 1 Millimeter (mm) Wellenlänge. Die dementsprechende Frequenz der emittierten Strahlung kann im Bereich zwischen etwa 300 Gigahertz (GHz) bis 400 Terrahertz (THz) liegen. Das Spektrum kann ebenso bevorzugt anhand der Wellenzahl m⁻¹ bzw. cm-¹ wiedergegeben werden, wie es im Bereich der Spektroskopie üblich ist. Ein Fachmann weiß, wie die Umrechnung zwischen diesen Einheiten vorgenommen wird.

Das Spektrum ist insbesondere so gewählt, dass es dem bevorzugten Anwendungsgebiet des Emitters, nämlich der Infrarotspektroskopie und insbesondere der photoakustischen Spektroskopie entspricht. Dabei ist insbesondere die Schwingungsanregung der zu spektroskopierenden und/oder zu detektierenden Gasmoleküle bevorzugt, welche je nach Gasmolekülen einem bevorzugten spektralen Bereich entsprechen. Beispielsweise ist für die Anregung von CO₂ Molekülen ein Spektralbereich von etwa 4,2 Mikrometern (µm) geeignet. Besonders bevorzugte Wellenlängenbereich der Infrarotstrahlung sind 700 nm bis 10 µm, bevorzugt 1 bis 10 µm, besonders bevorzugt 2 µm bis 10 µm.

Zur Erzeugung der Infrarotstrahlung ist bevorzugt eine Bereitstellung thermischer Energie in Form eines Heizelements vorgesehen. Besonders bevorzugt ist ein (Mikro-) Heizelement. Unter einem Mikro-Heizelement wird bevorzugt ein Heizelement mit Abmessungen der Größenordnung Mikrometer (µm) verstanden. Dabei umfasst das Heizelement eine erhitzbare Schicht aus einem leitfähigen Material, welches bei Durchfluss eines elektrischen Stroms joulesche Wärme produziert. Die produzierte Wärme zeigt bevorzugt eine Abhängigkeit vom ohmschen Widerstand des Elements und vom Quadrat der Stromstärke bzw. vom Quadrat der angelegten Spannung und dem inversen ohmschen Widerstand, je nachdem, ob eine Strom- oder eine Spannungsquelle verwendet wird. Eine thermische Quelle infraroter Strahlung hat für die PAS vorteilhafte Eigenschaften, wie z. B. eine breitbandige Emission, durch die eine Vielzahl verschiedenster Gasatome bzw. -moleküle mit nur einer Lichtquelle angeregt werden können. Gleichzeitig ist ein thermischer IR-Emitter besonders kostengünstig, einfach herzustellen und langlebig.

In einem Gleichgewichtszustand ist die produzierte Wärme gleich zu den Wärmeverlusten durch Wärmeleitung, Konvektion und Wärmestrahlung (synonym: thermische Strahlung, Infrarotstrahlung), welche an den äußeren Grenzflächen der stromdurchflossenen erhitzbaren Schicht abgegeben wird. Wie dem Fachmann bekannt ist, verursacht die produzierte Wärme unter anderem thermische Strahlung, insbesondere durch thermische Bewegung von Teilchen, welche z. B. eine Beschleunigung von Ladungsträgern und/oder oszillierende Dipolmomente zur Folge hat. Somit kann durch eine stromdurchflossene erhitzbare Schicht gezielt Infrarotstrahlung erzeugt werden. Die erhitzbare Schicht ist bevorzugt aus Metall, beispielsweise aus Wolfram, Molybdän oder aus Platin. Durch Anlegen einer geeigneten Spannung und den daraus resultierenden Stromfluss wird joulesche Wärme und somit letztendlich Infrarotstrahlung erzeugt.

Das Strahlungsspektrum eines erhitzen Körpers lässt sich dabei bevorzugt angenähert durch das Planck'sche Strahlungsgesetz beschreiben, wobei dem Fachmann die Unterschiede einer realen erhitzbaren Schicht zu einem schwarzen Körper bekannt sind, beispielsweise der Emissionsgrad oder die reale Abweichung von einem thermischen Gleichgewicht des Körpers. Trotz dieser Abweichungen werden das erzeugte Spektrum und dessen Intensität im Wesentlichen von der Temperatur und der abstrahlenden Fläche gemäß dem Planck'schen Strahlungsgesetz beschrieben.

Somit kann ein Fachmann durch gezieltes Design des (Mikro-) Heizelements ein bevorzugtes Spektrum mit einer bevorzugten Intensitätsverteilung erzielen. Hierzu sind neben dem Material und der geometrischen Ausgestaltung des Heizelements bevorzugt die zur Verfügung gestellte elektrische Energie, sowie die Größe der Wärmeverluste des Heizelements neben der Wärmestrahlung maßgeblich. Die Größe dieser Wärmeverluste wird beispielsweise bestimmt durch die Wärmeleitfähigkeit zwischen dem Heizelement und den angrenzenden Materialien und/oder Fluiden sowie deren Wärmekapazität und der Größe der Grenzfläche(n).

Ein IR- Emitter in Form eines Heizelements ist besonders kostengünstig und robust, gleichzeitig lässt sich aufgrund der spektralen Breite der Emission eine Vielzahl von Gasmolekülen bei der PAS detektieren. Durch einen vorzugsweise durchstimmbaren Bandpass-Filter lassen sich bevorzugt bei Bedarf schmalere Spektren aus dem breiten Emissionsspektrum selektieren.

Die Infrarotstrahlung kann vorzugsweise ebenso durch eine im gewünschten infraroten Spektralbereich emittierende Leuchtdiode (LED) und/oder einen Laser erzeugt werden. Insbesondere ein Laser weist vorzugsweise ein schmales Emissionsspektrum auf, sodass bevorzugt nur genau auf dieses Spektrum passende Absorptionslinien von Gasatomen bzw. - molekülen angeregt und somit detektiert werden können. Daher ist ein Laser vorteilhaft, wenn nur bestimmte Gasmoleküle detektiert werden sollen, wobei die Aussagekraft der Detektion bezüglich des Vorhandenseins dieser Moleküle besonders hoch ist, da andere Moleküle durch das schmale Spektrum des Lasers nicht angeregt werden können.

Die Emission des IR-Emitters erfolgt bevorzugt als Strahl, welcher in einer bevorzugten Richtung in Form einer Grade orientiert ist. Der Begriff Strahl soll im weiteren Verlauf den vorzugsweise gebündelten Teil der Strahlung entlang der bevorzugten Strahlrichtung des Emitters beschreiben, welcher vom Emitter ausgesandt wird, wobei insbesondere die Bereiche der größten Intensität entlang dieser Richtung den Strahl definieren. Intensität ist bevorzugt definiert als Flächenleistungsdichte und hat bevorzugt die Einheit Watt pro Quadratmeter oder abgekürzt W/m².

Es können zusätzliche Komponenten wie z. B. Linsen im Emitter integriert oder extern angebracht sein, die für eine Bündelung bzw. Kollimation des Strahls sorgen. Ein Fachmann weiß, wie er durch das Design des IR-Emitters sowie durch Verwendung weiterer Komponenten das Emissionsprofil der Strahlungsquelle so formt, dass ein gewünschtes Strahlprofil sowie eine gewünschte Strahlrichtung resultieren. Dabei kann der modulierbare IR-Emitter bevorzugt ohne zusätzliche Linsen auskommen, oder als ein System umfassend Strahlungsquelle und mindestens einer Linse zur Kollimation des Strahls vorliegen.

Der Emitter ist modulierbar, das bedeutet, dass die Intensität der emittierten Strahlung, bevorzugt die Intensität des Strahls im zeitlichen Verlauf kontrollierbar geändert werden kann. Die Modulation soll bevorzugt eine zeitliche Änderung der Intensität als messbare Größe hervorrufen. Das bedeutet z. B., dass die Intensität im zeitlichen Verlauf zwischen der innerhalb des Messzeitraums gemessenen schwächsten Intensität und der innerhalb desselben Zeitraums gemessenen stärksten Intensität ein Unterschied besteht, der größer ist als die Sensibilität eines für das Strahlungsspektrum und die Anwendung typischerweise verwendeten Geräts zur Messung oder Bestimmung der Intensität. Bevorzugt ist der Unterschied deutlich größer als ein Faktor 2, mehr bevorzugt 4, 6 oder 8 zwischen der stärksten und der schwächsten einstellbaren Intensität. Besonders bevorzugt erfolgt die Modulation der Intensität des modulierten Strahles für eine oder mehrere vorbestimmte Resonanzwellenlängen.

Vorzugsweise kann eine direkte Modulation durch Variation der Stromzufuhr vorgenommen werden. Bei einem thermischen Emitter ist eine solche Modulation aufgrund thermischer Zeitkonstanten meistens auf einen bestimmten Bereich eines Modulationsspektrums limitiert, z. B. im Bereich einer Größenordnung von bis zu 100 Hz. Bei z. B. einem Laser oder einer LED sind bevorzugt deutlich höhere Modulationsraten, z. B. im kHZ-Bereich und darüber hinaus, möglich.

Eine Modulation des Infrarot-Emitters kann vorzugsweise ebenso durch eine externe Modulation erfolgen, z. B. durch die Verwendung eines sich drehend Chopperrads und/oder eines Elektrooptischen Modulators.

Der IR-Emitter kann insbesondere ein in den Aufbau des Gassensors (bevorzugt monolithisch) integrierter MEMS-Emitter sein.

Die Detektionskammer ist bevorzugt mit Gas befüllbar. Dabei ist die Detektionskammer vorzugsweise ein Hohlraum im Gassensor. Das kann bevorzugt bedeuten, dass auch bei einem zumindest teilweise abgeschlossenen bzw. verschließbaren Volumen eine vorzugsweise verschließbare Öffnung zur Befüllung vorliegt. Je nach Messmethode der PAS kann dabei die Öffnung bevorzugt wiederverschließbar gestaltet werden, wodurch das Gas austauschbar sein kann. Es kann jedoch ebenso bevorzugt sein, die Kammer einmalig, z. B. während der Herstellung, mit Gas zu befüllen und danach nicht mehr auszutauschen bzw. nachzufüllen. Vorzugsweise kann auch ein Gasfluss realisiert werden, indem die Detektionskammer z. B. mindestens eine erste Öffnung umfasst.

Es kann bevorzugt über bspw eine erste Öffnung als Zulauf und eine zweite Öffnung als Ablauf entweder ein kontinuierlicher Gasfluss in die Kammer realisiert werden oder ein diskontinuierlicher Gasfluss, bei dem z. B. während einer Befüllungs- bzw. Gasaustauschphase eine Befüllung bzw. ein Austausch des Gases in der Detektionskammer vorgenommen werden kann. In einer Messphase kann bspw. der Gasfluss unterbrochen werden. Es können vorzugsweise zu verschiedenen Zeitpunkten verschiedene Gase analysiert werden, wobei bevorzugt zwischen zwei zu analysierenden Gasen kann ein Reinigungsgas zur Reinigung des Volumens von etwaigen Gasrückständen zugeführt werden.

Die Detektionskammer wird vorzugsweise auch als Detektorkammer bezeichnet.

Ist die Detektionskammer gegenüber der Umgebung zumindest teilweise geöffnet, z. B. durch eine wunschgemäß dimensionierte Öffnung, kann vorteilhafterweise ein permanenter Gasaustausch mit einer Umgebung stattfinden, wobei eine Befüllung der Detektionskammer durch Wechselwirkung mit einer Gasatmosphäre der Umgebung stattfindet.

Die Höhe der Detektionskammer entspricht bevorzugt der maximalen Ausdehnung der Detektionskammer in Richtung der IR-Strahlungsrichtung. Vorzugsweise entspricht hingegen die Breite Detektionskammer der maximalen Ausdehnung in Richtung einer zur Strahlungsrichtung senkrechten lateralen Ebene, in der Detektionskammer und Referenzkammer nebeneinander angeordnet vorliegen.

Vorzugsweise ist ebenso eine Tiefe definiert, welche bevorzugt senkrecht zur Höhe und zur Breite verläuft. Die Tiefe wird vorzugsweise ebenso als Länge bezeichnet

Die Dimensionierung der Detektionskammer insbesondere in Bezug auf diese drei Raumrichtungen und die Formgebung allgemein wird vorteilhafterweise je nach Anwendungsgebiet und/oder Anforderungen an den Gassensor bzgl. Abmessungen, Sensitivität und/oder anderer die Leistung beschreibender Parameter angepasst. Dabei kann eine Anpassung an die Strahldimensionierung des Emitters erfolgen oder die Dimensionierung so gewählt werden, dass akustischen Resonanzen gefördert werden. Die Detektionskammer kann vorzugsweise einen im Wesentlichen quaderförmigen Umriss aufweisen.

Es ist ebenso eine Referenzkammer umfasst, welche vorzugsweise von den Abmessungen und der geometrischen Gestaltung ähnlich zu der Detektionskammer gestaltet sein kann und deren Ausdehnungen analog zur Detektionskammer mit Höhe, Breite und/oder Tiefe/Länge bezeichnet werden.

Die Verwendung einer Referenzkammer gemeinsam mit einer Detektionskammer ist eine bevorzugter Messaufbau für die Gasanalyse durch photoakustische Spektroskopie. Dabei kann in der Referenzkammer vorzugsweise das gleiche Gas vorliegen wie in der Detektionskammer oder aber ein Referenzgas mit bekannten Eigenschaften. Im ersten Fall soll vorzugsweise im Wesentlichen nur die Detektionskammer mit IR-Strahlung bestrahlt werden, so dass durch Absorption dieser Strahlung entstehende Schalldruckwellen vorzugsweise im Wesentlichen dort entstehen und so durch einen bevorzugt zwischen beiden Kammern angeordneten Detektor bzw. Sensor vermessen werden kann. Lokale Druckschwankungen aufgrund externer Einflüsse, wie z. B. extern erzeugte Schalldruckwellen, betreffen hierbei vorzugsweise beide Kammern und werden vorteilhafterweise nicht gemessen, da der Sensor insbesondere im Wesentlichen Druckunterschiede zwischen beiden Kammern misst.

Ebenso kann im zweiten Fall, in der in der Referenzkammer ein Referenzgas vorliegt, bevorzugt sein, dass beide Kammern mit der modulierten IR-Strahlung bestrahlt werden, wobei vorzugsweise aufgrund eines unterschiedlichen Absorptionsverhaltens der Detektionskammer auf die dortige Zusammensetzung, insbesondere auf eine vom Referenzgas sich unterscheidende Zusammensetzung und/oder Konzentration geschlossen werden kann. Dabei kann insbesondere bevorzugt sein, dass die Referenzkammer ein Vakuum aufweist. Der Fachmann weiß, dass ein Vakuum in der Realität nie absolut ist, sondern sich durch einen gegenüber dem Atmosphärendruck bei Normalbedingungen erheblich geringeren Druck auszeichnet.

Vorzugsweise ist die Referenzkammer mit Gas befüllbar, wobei die entweder über eine eigene, vorzugsweise verschließbare Öffnung vorgenommen werden kann. Auch eine Befüllung bei der Herstellung ist denkbar. Es kann ebenso bevorzugt sein, dass die Referenzkammer keine eigene Öffnung aufweist, sondern durch den Sensorkanal mit einem Gas aus der Detektionskammer befüllt wird.

Zwischen Detektionskammer und Referenzkammer liegt vorzugsweise der Sensorkanal vor, welcher die Detektionskammer mit der Referenzkammer verbindet. Dieser weist bevorzugt einen gegenüber den Abmessungen der beiden Kammer erheblich verringerten Querschnitt aus. In diesem Sensorkanal ist insbesondere der MEMS-Sensor angeordnet, durch welchen Schalldruckwellen innerhalb des Sensorkanals detektiert werden können. Der MEMS-Sensor ist dabei vorzugsweise entsprechend angeordnet, um die Schalldruckwellen, welche aus der Detektionskammer und/oder der Referenzkammer den Sensorkanal erreichen, zu detektieren. Der Sensorkanal ist insbesondere in Form eines Verbindungsrohres bzw. Verbindungsröhrchens zwischen den Kammern ausgestaltet.

Der MEMS-Sensor kann dabei vorzugsweise die ganze Querschnittsfläche des Sensorkanals im Wesentlichen oder teilweise umfassen. Dabei kann der Sensor vorzugsweise eine insbesondere Apertur genannte Öffnung aufweisen. Der Sensor kann den Kanal bevorzugt abschließen oder aber eine vom Sensor nicht umfasste Öffnung im Kanal zwischen beiden Kammern ermöglichen. Er kann bevorzugt im Wesentlichen oder teilweise materialdicht für das sich in den Kammern befindliche Gas oder im Wesentlichen oder teilweise durchlässig sein. Bei einer Durchlässigkeit ist insbesondere bevorzugt, dass diese so ausgestaltet ist, dass ein Druckausgleich zwischen beiden Kammern stattfinden kann, dieser jedoch gegenüber den zu detektierenden Schalldruckwellen ausreichend verzögert wird, um die Schalldruckwellen effektiv detektieren zu können. Ein Fachmann weiß, wie er abhängig von der Anordnung, der Dimensionierung der Kammern und/oder des Kanals, dem verwendeten Sensor, dem zu detektierenden Gas und/oder weiteren Einflussgrößen eine Öffnung anordnen, ausgestalten und/oder dimensionieren muss, um vorgenanntes Ziel zu erreichen.

Vorzugsweise weist der Gassensor eine dem IR-Emitter zugewandte, einheitliche Oberfläche auf, die sich über die gesamte laterale Anordnung umfassend die Detektionskammer, den Sensorkanal und die Referenzkammer. Dabei ist vorzugsweise der Sensorkanal gegenüber den die Kammern umfassenden Innenvolumina etwas gegenüber dem IR-Emitter zurückgesetzt, um eine unerwünschte direkte IR-Einstrahlung auf den im Sensorkanal angeordneten MEMS-Sensor zu minimieren.

Vorzugsweise liegt die Detektionskammer im Strahlengang des Infrarot-Emitters vor. Das bedeutet bevorzugt, dass die Intensität des Strahls im Wesentlichen oder zumindest teilweise auf die dem Emitter zugewandte Seite der Detektionskammer trifft. Teilweise bedeutet bevorzugt zu mindestens 40 %, bevorzugt mindestens 50%, 60% oder mehr. Es bedeutet insbesondere, dass der Bereich des Maximums der Intensität des Strahls auf die Detektionskammer trifft. Bevorzugt bedeutet es, dass der Strahl so fokussiert und/oder kollimiert ist, dass ein wesentlicher Anteil der Intensität auf der dem Emitter zugewandten Seite auftrifft. Als bevorzugtes Beispiel sein ein Gauß-Strahl genannt, welcher insbesondere ein transversales Profil gemäß einer Gauß-Kurve aufweist. Entlang des Strahls ist dabei bevorzugt durch die Strecke mit der maximalen Intensität als z-Achse definiert. Der Strahlradius w auf der "Höhe" z des Strahls ist dabei bevorzugt definiert als der Abstand zur z-Achse, an dem die Intensität auf 1/e² (bevorzugt ca. 13,5 %), gefallen ist. Dieser Definition folgend ist bevorzugt, dass "die Detektionskammer liegt im Strahlengang des Infrarot-Emitters vor" bedeutet, dass der im Wesentlichen der gesamte Strahlradius auf der dem Emitter zugewandten Seite der Detektionskammer auftrifft.

Es kann bevorzugt sein, dass sich die Intensität des Strahls im Wesentlichen zu gleichen Teilen zwischen der Detektionskammer und der Referenzkammer aufteilt. Dabei gelten bevorzugt oben genannte Definitionen analog, jedoch für einen Strahl, der zu gleichen Teilen die Detektionskammer und die Referenzkammer bestrahlt.

Insbesondere wird mindestens eine Kammer mit IR-Strahlung beleuchtet, so dass ein Fluss/Druck des enthaltenen Gases zeitlich moduliert zwischen den beiden Kammern entsteht.

Bevorzugt ist die dem Emitter zugewandte Seite der Detektionskammer für die emittierte IR-Strahlung transparent, so dass die Strahlung im Wesentlichen den mit Gas befüllbaren Innenraum der Kammer erreicht. Die dem IR-Emitter zugewandte Seite insbesondere der Detektionskammer wird vorzugsweise auch als Einstrahlfläche bezeichnet.

Dies kann bevorzugt analog für die Referenzkammer gelten.

Dass die Detektionskammer im Strahlengang des Infrarot-Emitters vorliegt, bedeutet insbesondere, dass der Infrarot-Emitter mittels modulierbar emittierbarer Infrarotstrahlung Gas in der Detektionskammer zur Ausbildung von Schalldruckwellen anregen kann, da diese zumindest teilweise (bevorzugt zu mindestens 40 %, stärker bevorzugt zu mindestens 50 %, insbesondere zu mindestens 60 %) bestrahlt wird und insbesondere eine wesentlicher Teil Infrarotstrahlung das mit Gas befüllbare Volumen im Inneren der Detektionskammer erreicht. Ein wesentlicher Teil bedeutet insbesondere zu mindestens 80 %, stärker bevorzugt zu 90 % und insbesondere zu 95 %.

Begriffe wie im Wesentlichen, ungefähr, etwa, ca. etc. beschreiben bevorzugt einen Toleranzbereich von weniger als ± 20%, bevorzugt weniger als ± 10 %, noch stärker bevorzugt weniger als ± 5% und insbesondere weniger als ± 1%. Angaben von im Wesentlichen, ungefähr, etwa, ca. etc. offenbaren und umfassen stets auch den exakten genannten Wert.

Die Schalldruckwellen sind bevorzugt mit Hilfe des MEMS-Sensors im Sensorkanal detektierbar. Das bedeutet, dass der MEMS-Sensor bevorzugt von seiner Anordnung und seiner Realisierung geeignet ist, die Schalldruckwellen zu detektieren. Der MEMS-Sensor kann beispielsweise in Form eines Mikrofons in Form einer Membran ausgeführt sein, welche durch die Schalldruckwellen zu Schwingungen angeregt werden können, wobei die Schwingungen bevorzugt durch eine entsprechende elektrische, magnetische und/oder elektronische Anordnung und/oder Ansteuerung auslesbar sind.

Der MEMS-Sensor bezeichnet insbesondere ein Sensor in Form eines Mikrosystems (engl. *Micro-Electro-Mechanical System,* kurz MEMS). Ein Mikrosystem ist insbesondere ein miniaturisiertes Gerät, eine Baugruppe und/oder ein Bauteil, wobei die Komponenten Abmessungen der Größenordnung von etwa 1 Mikrometer (µm) oder kleiner haben und als System zusammenwirken. Der MEMS-Sensor ist z. B. ein MEMS-Mikrofon.

Insbesondere kann der gesamte Gassensor als MEMS realisiert sein. Dabei kann vorteilhafterweise der Sensor direkt im MEMs realisiert bzw. integriert sein.

Detektionskammer, Sensorkanal, Referenzkammer sowie MEMS-Sensor werden insbesondere in einem mehrlagigen Substrat gebildet. Substrat bezeichnet insbesondere das Grundmaterial für die Fertigung der jeweiligen Komponenten. Insbesondere orientiert sich der Begriff an der Halbleiterindustrie, bei dem aus dem Substrat Schaltungen gefertigt werden. Dabei kommen vorliegend aus der Halbleiterindustrie und/oder der MEMS-Fertigung bekannte Materialien und/oder Fertigungstechniken zum Einsatz, welche sich durch ihre Effizienz, Einfachheit, geringen Produktionskosten und Eignung zur Fertigung hoher Stückzahlen eignet.

Ein Substrat kann dabei durch Ätzprozesse und/oder physikalische Bearbeitungstechniken am Stück nach Wunsch bearbeitet und in der Form angepasst werden, insbesondere durch Abtragen und/oder Beseitigung von Bereichen und/oder Schichtdicken des einzelnen Substrats. Ein mehrlagiges Substrat umfasste insbesondere, mehrere, bevorzugt, 2, 3, 4, 5, 6, 7, 8, 9 oder 10 Lagen oder mehr einzelne dünne Substrate, welche einzeln bearbeitet und dann zum Gassensor, insbesondere umfassend die genannten Komponenten zusammengefügt werden kann.

Insbesondere durch die in einer lateralen Ebene nebeneinander angeordneten genannten Komponenten können die jeweiligen Schichten der Komponenten in der jeweiligen Substratlage sehr einfach und/oder im Wesentlichen gleichzeitig gefertigt werden. Es kann ein einfach herzustellender Gassensor mit geringer Bauhöhe und hoher Kompatibilität zu weiteren Halbleiterelemente wie z. B. elektronischen Schaltungen gefertigt werden. Es werden nur wenige Substratlagen verwendet. Hierdurch kann die Anzahl der verwendeten Komponenten vorteilhafterweise weiter reduziert werden. Es kann insbesondere durch ein geeignetes Zusammenfügen der Substratschichten eine monolithische Kammer mit integriertem Detektor realisiert werden. Monolithisch bedeutet bevorzugt, aus einem Stück bestehend, zusammenhängend und/oder fugenlos bzw. aus sehr kleinen Bauelementen untrennbar zusammengesetzt.

Durch die Kompaktheit und Kompatibilität des Gassensors ist ein besonders vielseitiges Anwendungsgebiet gegeben. Beispielsweise ist ein Einbau in ein Smartphone oder sonstigen vom Endverbraucher nutzbaren Geräten vorstellbar. Der Gassensor kann bspw. auch zur Emissionskontrolle eingesetzt und aufgrund seiner Abmessungen sehr gut nachgerüstet werden. Auch eine Nachrüstung in sensiblen Bereichen der Öffentlichkeit, wie z. B. Bahnhöfen, Flughäfen, Zügen etc. zur Gefahrenabwehr eines terroristischen Anschlags sind vorstellbar.

In einer bevorzugten Ausführungsform der Erfindung liegen die Referenzkammer und der Sensorkanal mit dem MEMS-Sensor nicht im Strahlengang des Infrarot-Emitters vor. Dies kann insbesondere dadurch erreicht werden, dass Detektionskammer, Sensorkanal und Referenzkammer lateral zueinander in einer zur Einstrahlungsrichtung senkrechten Ebene angeordnet sind. So kann durch geeignete Dimensionierung des Gassensors, insbesondere der Einstrahlfläche der Detektionskammer und/oder des auf die Detektionskammer gerichteten IR-Strahls erreicht werden. Hierdurch kann vorteilhafterweise erreicht werden, dass durch Pas modulierte Schalldruckwellen im Wesentlichen nur in der Detektionskammer erzeugt werden. So kann die Messgenauigkeit und -empfindlichkeit verbessert werden. Außerdem können auch etwaige thermische Einflüsse, welche die Messgenauigkeit des MEMS-Sensors stören, vorzugsweise minimiert werden.

In einer weiteren bevorzugten Ausführungsform der Erfindung umfasst das mehrlagige Substrat mindestens zwei Substratlagen ausgewählt aus der Gruppe bestehend aus monokristallinem Silizium, Polysilizium, Siliziumdioxid, Siliziumcarbid, Siliziumgermanium, Siliziumnitrid, Nitrid, Germanium, Kohlenstoff, Galliumarsenid, Galliumnitrid, Indiumphosphid und Glas.

Diese Materialien sind in der Halbleiter- und/oder Mikrosystemherstellung besonders einfach und kostengünstig zu bearbeiten und eignen sich ebenfalls gut für eine Massenherstellung. Ebenso sind diese Materialien für ein Dotieren und/oder Beschichten besonders geeignet, um in bestimmten Bereichen die gewünschten elektrischen, thermischen und/oder optischen Eigenschaften zu erzielen. Der Systemwafer kann z. B. möglichst niedrig dotiert sein zwecks hoher IR Transparenz. Insbesondere für die Herstellung eines Gassensors aus einem mehrlagigen Substrat, bevorzugt umfassend MEMS-Elemente, bieten die vorgenannten Materialien vielfältige Vorteile aufgrund der Verwendbarkeit standardisierter Herstellungstechniken, welche für die Integration weiterer Komponenten, wie z. B. elektronische Schaltungen ebenfalls besonders geeignet sind. Insbesondere die Verwendung von Glas in mindestens einer Substratlage ist gut geeignet für die Realisierung einer Einstrahlfläche der Detektionskammer und/oder der Referenzkammer.

In einer weiteren bevorzugten Ausführungsform der Erfindung wird das mehrlagige Substrat durch Bonden mindestens zweier Wafer gebildet.

Das Bonden von Wafer beschreibt bevorzugt einen Verfahrensschritt in der Halbleiter- und Mikrosystemtechnik, bei dem zwei Wafer oder Scheiben, z. B aus Silizium, Quarz, Glas und/oder den vorgenannten Materialien miteinander verbunden werden.

Beim Bonden können vorzugsweise verschiedene Verfahren zum Einsatz kommen:
- Beim direkten Bonden, insbesondere von Silizium-Wafern, werden bevorzugt hydrophile und hydrophobe Oberflächen der Wafer unter hohen Temperaturen in Kontakt gebracht. Vorzugsweise wird dabei der eine Wafer mittig gegen den anderen gepresst, wobei vorteilhafterweise ein erster Kontaktpunkt entsteht. Diese mechanische Verbindung im Kontaktbereich beruht dabei vorzugsweise auf Wasserstoffbrücken und/oder Van-der-Waals-Wechselwirkungen. Der somit verbundene Kontaktbereich wird dabei vorzugsweise auf die übrige Waferfläche(n) ausgedehnet, indem anfangs vorhanden Abstandhalter zwischen diesen Flächen sukzessive entfernt werden. Dabei betragen die Prozesstemperaturen vorzugsweise zwischen 1000 °C und 1200 °C und es wird ein Druck auf die Wafer der Größenordnung 10 Megapascal (MPa) bis 25 MPa, insbesondere ungefähr 18 MPa, ausgeübt. Das Direkt-Bonden kann vorzugsweise für die Verbindung zweier Silizumwafer und/oder Siliziumdioxidwafer verwendet werden.
- Beim anodischen Bonden findet insbesondere ein Glas mit erhöhter Na+-lonenkonzentration (bevorzugt positiv geladenen Natriumionen) Verwendung, welches bevorzugt mit einem Siliziumwafer in Kontakt gebracht wird. Dabei wird eine elektrische Spannung angelegt, welche insbesondere konfiguriert ist, eine negative Polung am Glas zu erzeugen. Somit wird bevorzugt und insbesondere mithilfe einer erhöhten Prozesstemperatur erreicht, dass die Natriumionen (Na+) zur Elektrode diffundieren, wodurch sich bevorzugt eine Raumladungszone an der Grenzfläche ausbildet, welches eine Erhöhung des elektrischen Feldes bewirkt und Si-O-Si-Bindungen erzeugt. Diese Bindungen weiten sich bevorzugt sukzessive auf die gesamte Verbindungsfläche zwischen Glas und Silizium aus. Somit können insbesondere Glas und Siliziumwafer miteinander verbunden werden. Bei entsprechender Anpassung des Prozesses ist ebenso ein Bonden zweier Siliziumlagen und/oder einer Silizium-Metall Lage mit einem Glas möglich. Das anodische Bonden kann vorzugsweise bei Temperaturen von etwa 400 °C stattfinden, es kann ebenso bevorzugt bei "Niedrigtemperatur" bei etwa 180 °C stattfinden, wobei die zu bondenden Materialien vorzugsweise geschont werden. Bevorzugt können auch verschiedene der vorgenannten Materialien gebonded werden.
- Bevorzugt können auch Bond-Verfahren mit sogenannten Zwischenschichten zwischen den zu bondenden Wafern zum Einsatz kommen, wie bspw. das sogenannte Eutektische Bonden, welches vorzugsweise auch der einer Verbindung durch eine eutektische Legierung als Zwischenschicht, z. B. Si-Au (Silizium-Gold) oder Ge-Al (Germanium-Aluminium), basiert. Eine eutektische Legierung ist vorzugsweise eine Legierung, deren Bestandteile in einem solchen Verhältnis zueinander gemischt sind, dass bei einer bestimmten Temperatur die ganze Legierung flüssig bzw. fest wird. Eutektisches Bonden kann z. B. zum Verbinden zweier Siliziumwafer verwendet werden. Bevorzugt können jedoch auch andere der vorgenannten Materialien verbunden werden.
- Auch das Glas-Frit-Bonden beruht bevorzugt auf der Verwendung einer Zwischenschicht zwischen den zu verbindenden Wafern, wobei die Verbindungsbildung insbesondere durch Aufschmelzen von Glasloten/Glas-Fritten. Glaslot umfasst bevorzugt ein Glas, welches eine niedrige Erweichungstemperatur aufweist, bspw. ca. 400 °C. Glasfritte umfasst bevorzugt oberflächlich geschmolzenes Glaspulver, dessen Glaskörner bevorzugt zumindest teilweise zusammenbacken bzw. -sintern. Diese Art des Bondens kann bevorzugt Silizium- und/oder Siliziumdioxidwafer miteinander verbinden, bevorzugt jedoch auch andere vorgenannte Materialien.
- Das adhäsive Bonden beschreibt bevorzugt eine Verbindungsbildung durch eine Zwischenschicht umfassend Klebstoff. Durch adhäsives Bonden können vorzugsweise verschiedene der vorgenannten Materialien miteinander gebonded werden.

Bevorzugt kann durch Fotolithographie, Ätzen und/oder Lift-off-Verfahren ein selektives Bonden vorgenommen werden.

Durch Bonden mehrerer Lagen von einzeln vorbearbeiteten Substraten können vorteilhafterweise komplexe Komponenten von Gassensoren und insbesondere vollintegrierte, komplette Gassensoren einfach hergestellt werden.

Das Bonden von Strukturen aus vorbearbeiteten Substraten erlaubt die einfache Herstellung komplexer Strukturen, welche nur mit großem Aufwand aus einem einzelnen Wafer und/oder Substrat hergestellt werden könnten. Das Bonden mehrlagiger Substrate kann bspw. zur einfachen und effizienten Herstellung von Kavitäten bzw. Kammern des Gassensors verwendet werden, ohne dass diese aufwendig aus dem Inneren eines Rohmaterials herausgearbeitet werden müssen.

Die aus dem Bonden der Wafer resultierende Vorrichtung wird vorzugsweise auch als Wafer-Stack bezeichnet.

In einer weiteren bevorzugten Ausführungsform der Erfindung umfasst ein unterer Systemwafer den MEMS-Sensor sowie mindestens zwei untere Kavitäten und ein oberer Deckelwafer weist zu den unteren Kavitäten komplementäre obere Kavitäten auf, sodass durch Bonden des unteren Systemwafers und des oberen Deckelwafers die Referenzkammer und Detektionskammer gebildet werden.

Die jeweiligen Kavitäten der beiden zu bondenden Wafer sind insbesondere halbseitig geschlossene Kavitäten, welche insbesondere auf der dem jeweils anderen Wafer zugewandten Seite geöffnet sind, so, dass durch Zusammenfügen im Wesentlichen ganzseitig geschlossene Kavitäten entstehen, wobei bevorzugt etwaige Öffnungen für einen Gasaustausch und/oder den Sensorkanal bestehen können. Die Kavität des jeweiligen Wafers umfasst insbesondere mindestens zwei Vertiefungen im Wafer auf der Seite des Wafers, welche mit dem anderen Wafer verbunden werden soll. Die Vertiefungen beider Wafer sind dabei jeweils so angeordnet, dass sie miteinander nach dem Zusammenfügen korrespondieren, wobei jeweils eine Vertiefung des einen und des anderen Wafers miteinander einen gemeinsamen Hohlraum innerhalb der Zusammengesetzten Struktur bilden.

Der MEMS-Sensor ist bevorzugt zwischen den Kavitäten des unteren System-Wafers enthalten. Dieser kann bevorzugt in einem gemeinsamen Strukturierungsprozess mit der Ausbildung der Kavitäten geformt werden.

Bevorzugt werden durch die jeweils zwei Kavitäten pro Wafer nach dem Bonden beider Wafer die Detektionskammer und die Referenzkammer gebildet. Dabei ist bevorzugt zumindest in einem der Wafer zwischen beiden Kavitäten eine verbindende Kavität angeordnet, welche nach dem Zusammenfügen den Sensorkanal bildet. Besonders bevorzugt weisen beide Wafer zueinander korrespondierende Kavitäten auf, welche nach dem Zusammensetzen analog den Sensorkanal bilden. Diese mindestens eine Kavität hat bevorzugt bezüglich der geometrischen Abmessungen, insbesondere bezüglich der Tiefe der Vertiefung im Wafer, eine geringere Ausdehnung als die anderen beiden Kavitäten.

Bevorzugt ist der MEMS-Sensor in der Kavität für den Sensorkanal oder zu diesem korrespondierend auf dem Systemwafer angebracht, sodass dieser nach dem Bonden im Sensorkanal vorliegt.

Es können bevorzugt ebenso (z. B. lateral abgeleitete) Anschlusspads und/oder Leitungen für etwaige Elektronik zur Auslesung des MEMS-Sensors umfasst sein. Ebenso kann optional ein durchstimmbarer IR Filter auf dem Systemwafer vorhanden sein.

Der Deckelwafer kann vorzugsweise auch aus Glas bestehen.

Der Deckelwafer kann bevorzugt ein "Printed Circuit Board" (PCB) und/oder eine (Träger-) Keramik, insbesondere umfassend Leiterbahnen aufweisen. So kann beispielsweise eine elektronische Verschaltung des Gassensors und insbesondere des MEMS-Sensors bzw. der MEMS-Sensor an sich besonders leicht und kostensparend realisiert werden.

Ein PCB bezeichnet bevorzugt eine Leiterplatte bzw. Platine oder gedruckte Schaltung. Diese ist bevorzugt ein Träger für elektronische Bauteile, insbesondere Surface Mounted Devices (SMDs) und/oder intergierte Schaltungen bzw. kann insbesondere selber Bestandteil einer integrierten Schaltung sein.

Ein PCB kann z. B. elektrisch isolierendes Material mit daran haftenden, leitenden Verbindungen (Leiterbahnen), insbesondere aus Kuper, umfassen. Als isolierendes Material kann bspw. faserverstärkter Kunststoff, Hartpapier, Teflon, Aluminiumoxid und/oder Keramik umfasst sein.

Eine Trägerkeramik umfasst insbesondere ein keramisches Trägermaterial, welches durch Strukturierung und/oder Ausstattung mit weiteren Komponenten, wie z. B. Leiterbahnen bezüglich einer Funktionalität gestaltet wird. Eine Keramik bzw. ein keramisches Material umfasst insbesondere Silikat, Aluminiumoxid, Berylliumoxid, Zirconium(IV)-oxid, Titan(IV)-oxid, Siliciumcarbid, Bornitrid, Borcarbid, Siliciumnitrid, Aluminiumnitrid, Molybdändisilicid und/oder Wolframcarbid.

Auf diese Weise kann der Gassensor besonders einfach, weitestgehend integriert und unter Verwendung möglichst weniger und einfacher Prozessschritte hergestellt werden. Zunächst werden vorteilhafterweise Systemwafer und Deckelwafer einzeln gefertigt und müssen dann im Wesentlichen nur noch durch Bonden zum Gassensor zusammengefügt werden.

In einer weiteren bevorzugten Ausführungsform der Erfindung umfasst ein unterer Systemwafer den MEMS-Sensor sowie mindestens zwei untere Kavitäten, wobei durch Bonden des unteren Systemwafers und eines oberen Deckelwafers die Referenzkammer und Detektionskammer gebildet werden.

In dieser bevorzugten Ausführungsform werden die Kammern insbesondere durch die Kavitäten des Systemwafers gebildet, welche durch das Bonden des Deckelwafers im Wesentlichen von oben geschlossen werden.

Diese Ausführungsform ist besonders einfach und billig in der Herstellung.

In einer weiteren bevorzugten Ausführungsform der Erfindung umfasst ein unterer Systemwafer den MEMS-Sensor sowie eine untere Kavität und ein oberer Deckelwafer weist zu der unteren Kavität zwei komplementäre obere Kavitäten auf, sodass durch Bonden des unteren Systemwafers und des oberen Deckelwafers die Referenzkammer, die Detektionskammer und der Sensorkanal gebildet werden.

In einer weiteren bevorzugten Ausführungsform der Erfindung weist die Detektorkammer und/oder die Referenzkammer eine Höhe von 10 µm bis 2 mm, bevorzugt von 50 µm bis 1 mm, besonders bevorzugt von 100 µm bis 500 µm auf.

So kann eine flache und kompakte Bauweise, insbesondere eine geringe Bauhöhe des Gassensors erreicht werden. Insbesondere ist aufgrund der lateral angeordneten Bauweise der Kammern die Bauhöhe nicht entscheidend für die Qualität und/oder Sensitivität der Messung. Bei in Strahlrichtung (übereinander) angeordneten Kammern ist es vorteilhaft, eine gewisse Mindestbauhöhe zu erzielen, um einen etwaig unerwünschten Einfluss der IR-Strahlung auf die Referenzkammer und/oder den Sensor zu minimieren. Dies ist bei der lateralen Bauweise vorteilhafterweise nicht erforderlich.

In einer weiteren bevorzugten Ausführungsform der Erfindung weist die Detektorkammer und/oder die Referenzkammer eine Länge oder Breite von 100 µm bis 5 mm, bevorzugt von 200 µm bis 3 mm, besonders bevorzugt von 500 µm bis 2mm auf.

So gleichzeitig eine kompakte Bauweise und ein ausreichendes Volumen gebildet werden, um detektierbare Schallwellen durch PAS anzuregen.

In einer weiteren bevorzugten Ausführungsform der Erfindung weist der Sensorkanal eine Länge von 1 µm bis 500 µm, bevorzugt von 10 µm bis 200 µm, besonders bevorzugt von 10 µm bis 100 µm auf.

In einer weiteren bevorzugten Ausführungsform der Erfindung weist der Sensorkanal eine Länge einen Querschnitt von 1 µm² (beispielsweise 1x1 µm²) bis 250 000 µm² (z.B. 500x500 µm²), bevorzugt, von 100 µm² (beispielsweise 10x10 µm²) bis 25 000 µm² (beispielsweise 50x50 µm²) aufweist.

Somit kann der zwischen Detektionskammer und Referenzkammer angeordnete Sensorkanal eine ausreichende laterale Trennung der beiden Kammern bei gleichzeitig kompakter Bauweise erzielen. Gleichzeitig kann besonders einfach ein MEMS-Sensor im Sensorkanal angeordnet werden.

In einer weiteren bevorzugten Ausführungsform der Erfindung ist der MEMS-Sensor ein Schalldruckdetektor, wobei der Schalldruckdetektor bevorzugt einen piezoelektrischen, piezoresistiven und/oder magnetischen Balken und/oder ein kapazitives, piezoelektrischen, piezoresistives und/oder optisches Mikrofon umfasst.

Die Schalldruckwellen, welche durch die PAS erzeugt werden, können vorzugsweise auf verschiedene Arten detektiert werden. Dabei ist ein Schalldruckdetektor ein besonders gut geeignetes Mittel. Der Schalldruckdetektor kann insbesondere ein piezoelektrischer Balken sein.

Ein piezoelektrischer Balken ist vorzugweise eine schwingfähige Struktur, insbesondere in Form eines Biegebalkens, welcher ein piezoelektrisches Material, z. B. in Form eines Aktuators umfasst.

Dabei kann es bevorzugt sein, dass der Biegebalken passiv ist, das bedeutet bevorzugt, dass er durch die Schalldruckwellen zu einer Schwingung veranlasst wird. Diese erzeugen dabei wiederum durch die Verformung des piezoelektrischen Materials eine Spannung, welche auf dem piezoelektrischen Effekt beruht. Der (direkte) piezoelektrische Effekt beschreibt bevorzugt das Auftreten einer elektrischen Spannung und/oder eine Änderung der Impedanz an einem aus entsprechendem Material gefertigten Festkörper, wenn er elastisch verformt wird. Die Spannung kann z. B. durch geeignete Kontaktierung abgegriffen und durch eine entsprechende elektronische Schaltung ausgelesen werden.

Es kann ebenso bevorzugt sein, dass der Biegebalken aktiv ist, das bedeutet insbesondere, dass er aufgrund des inversen piezoelektrischen Effekts zu einer Schwingung veranlasst wird. Der piezoelektrische Effekt beschreibt bevorzugt die Verformung eines Materials bei Anlegen einer elektrischen Spannung und/oder eines elektrischen Feldes, wodurch insbesondere durch das Material eine Kraft ausgeübt werden kann. Durch die Schalldruckwellen kann dabei bevorzugt eine Variation der Dämpfung des schwingenden Balkens verursacht werden, welche messbar ist, z. B. durch eine Änderung der Resonanzfrequenz des schwingenden Balkens.

Ein passiv aufgrund von Schalldruckwellen schwingender Balken kann bevorzugt ebenso ausgelesen werden, z. B. durch kapazitive, magnetische und/oder piezoresistive Methoden. Die Idee dabei ist bevorzugt ebenfalls, dass durch die Schwingung eine elektrisch auslesbare Veränderung erzeugt wird, z. B. basierend auf einem sich ändernden magnetischen Fluss durch einen mitschwingenden Magneten, durch eine sich ändernde Kapazität zwischen einer schwingenden und einer feststehenden Elektrode und/oder durch einen sich ändernden elektrischen Widerstand in einem piezoresistiven Material.

Ein Mikrofon umfasst vorzugsweise eine schwingfähig gelagerte Membran, welche durch Schalldruckwellen zu Schwingungen angeregt wird, welche wiederum elektrisch auslesbar ist, ähnlich dem vorstehend beschriebenen Balken. Dabei können ebenfalls kapazitive, piezoelektrische und/oder piezoresistive Messmethoden der Schwingungsauslegung zur Anwendung kommen.

Bevorzugt kann ebenso ein optisches Mikrofon zur Anwendung kommen, wobei dies Schwingungen vorzugsweise durch Reflektion z. B. eines Laserstrahls auf der Membran in ein optisches Signal umgewandelt werden kann, welches z. B. in einer interferometrischen Anordnung ausgelesen wird.

In einer weiteren bevorzugten Ausführungsform der Erfindung ist der MEMS-Sensor ein kapazitives Mikrofon, umfassend eine MEMS-Membran als Elektrode sowie eine Gegenelektrode und wobei die MEMS-Membran bevorzugt eine maximale Ausdehnung in mindestens eine Richtung aufweist von 100 µm bis 1500 µm, insbesondere 200 bis 1000 µm. Diese Ausführungsform stellt eine ideale Verbindung aus Kompaktheit und Sensibilität des Sensors da.

Bevorzugt weist die Membran des Mikrofons, insbesondere die MEMS-Membran, eine kleine Öffnung, welche bevorzugt Apertur genannt wird, auf. Insbesondere, wenn die (MEMS-) Membran den ganzen Querschnitt des Sensorkanals umfasst und somit ein trennendes Element zwischen Detektionskammer und Referenzkammer im Sensorkanal darstellt, welche insbesondere druckdicht sind, kann eine Apertur vorzugsweise zum Druckausgleich umfasst sein. So kann unter anderem die Langlebigkeit der Membran gesteigert werden.

In einer weiteren bevorzugten Ausführungsform der Erfindung ist der MEMS-Sensor ein Durchflusssensor, bevorzugt ein thermischer Durchflusssensor, ein Hitzedraht-Anemometer, ein thermoelektrisches Anemometer und/oder ein resistives Anemometer.

Anstelle eines Schalldruckdetektors können durch Druckunterschiede entstehende Gasflüsse im Sensorkanal auch durch einen Durchflusssensor detektiert werden. Ein Durchflusssensor ist bevorzugt ein Sensor, welcher den Durchfluss eines Gases durch einen Kanal, ein Rohr und/oder ein Röhrchen messen kann. Dieses ist vorzugsweise der Sensorkanal. Bei dieser Ausführungsform ist insbesondere bevorzugt, dass eine Apertur zwischen Detektionskammer und Referenzkammer vorliegt, damit ein Durchfluss im Sensorkanal stattfindet, welcher messbar ist.

Ein thermischer Durchflusssensor beruht bevorzugt auf dem Prinzip, dass die Wärme eines beheizten Elementes, z. B. eines Heizdrahts, in Abhängigkeit von der Strömungsgeschwindigkeit eines Gases entzogen wird. Der Fachmann weiß, wie er somit aus der messbaren Strömungsgeschwindigkeit auf die bei einer PAS erzeugten Schalldruckvariationen und schließlich auf eine Gaskonzentration schließen kann.

Ein Anemometer wird bevorzugt eine Vorrichtung zur lokalen Messung der Geschwindigkeit eines Strömungsfeldes eines Fluides bezeichnet.

Ein Hitzedraht-Anemometer wird vorzugsweise eine stromdurchflossene Sensorfläche und/oder ein Draht als Sonde verwendet und elektrisch erwärmt. Die verwendeten Materialien haben bevorzugt einen temperaturabhängigen Widerstand, welcher sich insbesondere mit steigender Temperatur erhöht. Die elektrisch zugeführte Wärmeleistung wird von der Strömung des Fluides in Abhängigkeit von dessen Geschwindigkeit teilweise als Wärmeverlustleistung abtransportiert. Es kann vorzugsweise der Heiz-Strom konstant gehalten und der Spannungsabfall am Widerstand gemessen werden. Die gemessene Spannung ist dann vorzugsweise proportional zur Temperatur der Sonde, wobei mit steigender Strömungsgeschwindigkeit sich die Sonde weiter abkühlt und sich die gemessene Spannung bevorzugt verringert.

Es kann ebenso vorzugsweise die Temperatur konstant gehalten werden, wobei der Strom zum Heizen je nach Abkühlung durch das strömende Gas variiert.

Es kann ebenso bevorzugt ein thermoelektrisches Anemometer und/oder ein resistives Anemometer zum Einsatz kommen. Auch ein Ultraschallanemometer kann geeignet sein. Hierbei werden Ultraschallwellen vom Gas, in dem sie sich ausbreiten, mitgeführt, sodass die Laufzeit von Signalen über eine Messstrecke fester Länge von der Durchströmung der Messstrecke abhängt. Bevorzugt entspricht die Länge des Sensorkanals der Messstrecke zwischen Ultraschallgeber und einem Ultraschallsensor, sodass präzise der Durchfluss zwischen Detektions- und Referenzkammer bestimmbar ist.

Vorzugsweise kann auch eine Thermosäule zum Einsatz kommen. Dies ist vorzugsweise ein elektrisches Bauelement, durch das thermische Energie in elektrische Energie umgewandelt werden kann. Die Thermosäule kann z. B. bei der Verwendung eines Hitzedraht-Anemometers, welches bei konstanter Temperatur gehalten werden soll, Verwendung finden.

Aufgrund der bevorzugt fehlenden mechanischen Komponenten sind MEMS-Sensoren dieser Ausführungsform besonders einfach und kompakt herstellbar und dabei sehr robust.

In einer weiteren bevorzugten Ausführungsform der Erfindung liegt das Durchflusssensor in dem Sensorkanal vor und bildet eine Apertur, welche bevorzugt eine maximale Ausdehnung in mindestens eine Richtung von 100 µm bis 1500 µm, insbesondere von 200 µm bis 1000 µm aufweist.

Durch die Größe der Apertur bzw. des Ventilationsloches kann die Empfindlichkeit und/oder Dynamik des Gassensors vorteilhafterweise eingestellt werden. Dies hängt bevorzugt von der absoluten Größe der Apertur ab. In einigen Fällen hängt dies auch bevorzugt von der relativen Größe im Vergleich zu den Abmessungen des Sensorkanals, insbesondere des Querschnitts des Sensorkanals, ab. Die vorgenannten Größen der Apertur haben sich insbesondere bei den in diesem Dokument genannten Abmessungen als besonders vorteilhaft erwiesen.

Die Apertur umfasst dabei vorzugsweise die Komponenten des MEMS-Sensors, z. B. das Heizelement und die Thermosäule, z. B. in einem Randbereich der Apertur und oder als Elemente, welche durch ihre äußeren Abmessungen die Apertur bilden.

In einer weiteren bevorzugten Ausführungsform der Erfindung bilden die Detektorkammer, der Sensorkanal und die Referenzkammer ein geschlossenes System, welches mit einem Referenzgas gefüllt ist und wobei ein zu analysierendes Gas im Strahlengang zwischen dem Infrarotemitter und der Detektionskammer vorliegt, sodass der Anteil des Referenzgases im zu analysierenden Gas anhand der Ausbildung von Schalldruckwellen in der Detektionskammer messbar ist.

Die Detektionskammer enthält bevorzugt ein Referenzgas, welches auf den IR-Emitter dergestalt abgestimmt ist, dass in die Detektionskammer eindringende, modulierte IR-Strahlung eine PAS mithilfe des dortigen Gases ermöglicht. Ist nun in der Messstrecke zwischen dem Infrarotemitter und der Detektionskammer ebenfalls ein Gas enthalten, welches die IR-Strahlung absorbiert (insbesondere das Referenzgas) und findet PAS statt, dann wird die Stärke der Absorption in der Detektionskammer vermindert. Durch die Größe der Minderung lässt sich auf die Konzentration des Gases in der Messstrecke schließen. Dabei ist vorzugsweise die Ausbildung von Schalldruckwellen in der Detektionskammer umso kleiner, umso mehr vom Referenzgas im Strahlengang außerhalb der Detektionskammer vorhanden ist, da dann insbesondere bereits dort eine Absorption und eine Anregung stattfindet. Bevorzugt wird hierbei ein schmalbandiger IR-Emitter eingesetzt, damit möglichst nur das Referenzgas angeregt werden kann

Diese Messmethode ist besonders sensitiv für eine Messung eines Anteils eines zuvor bestimmten Gases. Dabei kann ein kleiner Freistrahlzwischenraum zwischen IR-Emitter und Detektionskammer ausreichend sein. So kann sehr einfach ein kompakter Gassensor bereitgestellt werden, der eine Konzentration eines bestimmten Gases in der Umgebung des Gassensors messen kann.

In einer weiteren bevorzugten Ausführungsform der Erfindung stellt die Detektionskammer ein offenes System dar, welches eine oder mehrere Öffnungen aufweist, sodass ein zu analysierendes Gas in die Detektionskammer einströmen oder diffundieren kann.

Die Öffnungen sind dabei bevorzugt groß genug, dass sie einen geeigneten Strömungswiderstand haben für ein Eindiffundieren haben und/oder den Aufbau einer akustischen Druckwelle in der Detektionskammer nicht verhindern. Herstellungsbedingt ist ein Querschnitt bevorzugt, der aus einem Ätzprozess hervorgeht. Beim nasschemischen Ätzen (z. B. mit Kaliumhydroxid - KOH) gibt es vorzugsweise eine Abhängigkeit von der Kristallrichtung, beim Trockenätzen kann ein im Wesentlichen quadratischer Querschnitt bevorzugt sein.

In einer weiteren bevorzugten Ausführungsform der Erfindung weisen die Detektionskammer zwei oder mehr Öffnungen auf mit einer maximalen Ausdehnung in mindestens eine Richtung von 1 nm bis 500 µm.

Diese Größen haben sich bei einem kompakten Gassensor als besonders geeignet erwiesen.

In einer weiteren bevorzugten Ausführungsform der Erfindung erlaubt der Infrarotemitter eine wellenlängenselektive Abstrahlung und/oder im Strahlengang zwischen dem Infrarotemitter und der Detektionskammer liegt ein wellenlängenselektiver Filter, beispielsweise eine Fabry-Perot-Filter, vor.

Der wellenlängenselektive Filter ist bevorzugt durchstimmbar. So kann der Gassensor zur Bestimmung des Vorhandenseins und/oder der Konzentration verschiedener Gase verwendet werden, welche bei verschiedenen Wellenlängen zur PAS angeregt werden können.

Ein wellenlängensensitiver Infrarotemitter kann z. B. ein durchstimmbarer Laser sein und/oder mehrere Laser verschiedener Wellenlängen umfassen.

Bei Verwendung eines durchstimmbaren Filters kann insbesondere ein IR-Emitter mit einem breiten Spektrum zum Einsatz kommen, z. B. eine LED und/oder ein thermischer Emitter.

In einem weiteren Aspekt betrifft die Erfindung ein Verfahren zur Herstellung eines photoakustischen Gassensors gemäß einem der vorherigen Ansprüche umfassend die Schritte
- Bereitstellen mindestens zweier Substratlagen
- Aufbringen mindestens einer Lage eines leitfähigen Materials auf einer ersten Substratlage und/oder Strukturierung eines leitfähigen Materials auf der ersten Substratlage zur Bildung eines MEMS- Sensors
- Ätzen von Kavitäten in der ersten und/oder zweiten Substratlage
- Verbinden der ersten Substratlage mit der zweiten Substratlage zur Bildung der Detektionskammer, der Referenzkammer und des Sensorkanales, wobei der Sensorkanal die Detektionskammer mit der Referenzkammer verbindet und in dem Sensorkanal der MEMS-Sensor integriert vorliegt.

Der durchschnittliche Fachmann erkennt, dass technische Merkmale, Definitionen und Vorteile bevorzugter Ausführungsformen des erfindungsgemäßen photoakustischen Gassensors auch für das erfindungsgemäße Herstellungsverfahren gelten.

Ein Aufbringen mindestens einer Lage eines leitfähigen Materials umfasst bevorzugt neben dem Aufbringen einer Lage ebenso das Aufbringen mehrerer Lagen und insbesondere eines Lagensystems. Ein Lagensystem umfasst dabei mindestens zwei planvoll zueinander aufgebrachte Lagen.

Das Aufbringen einer Lage oder eines Lagensystems dient bevorzugt der Definition des MEMS-Sensors auf der ersten Substratlage.

Ein Aufbringen umfasst beispielsweise ein Abscheiden, z. B. im Falle eines Substrats aus Polysilizium.

Das Ätzen von Kavitäten kann vorzugsweise in einer Substratlage vorgenommen werden, wobei die Kavitäten nur von der anderen Lage, insbesondere dem Deckelwafer, zu den Kammern im Wesentlichen verschlossen werden. Dies ist insbesondere für eine einfache und kostengünstige Herstellung vorteilhaft. Als zweite Lage bzw. Deckelwafer kann dabei insbesondere ein PCB oder eine Keramik mit Leiterbahnen zum Einsatz kommen.

In einer bevorzugten Ausführungsform der Erfindung ist
- ein Ätzen und/oder eine Strukturierung ausgesucht aus der Gruppe umfassend Trockenätzen, nasschemisches Ätzen und/oder Plasmaätzen, insbesondere Reaktives lonenätzen, Reaktives lonentiefenätzen (Bosch-Prozess);
- das Aufbringen ausgesucht aus der Gruppe umfassend physikalische Gasphasenabscheidung (PVD), insbesondere thermisches Verdampfen, Laserstrahlverdampfen, Lichtbogenverdampfen, Molekularstrahlepitaxie, Sputtern, chemische Gasphasenabscheidung (CVD) und/oder Atomlagenabscheidung (ALD) und/oder
- das Verbinden der Substratlagen ausgesucht aus der Gruppe umfassend Waferbonden, Direktbonden, Oberflächenaktiviertes Bonden, Plasmaaktiviertes Bonden, Anodisches Bonden, Eutetkisches Bonden, Schweiß-Bonden, Glas-Frit-Bonden und/oder Adhäsives Bonden.

Oberflächenaktiviertes Bonden und/oder Plasmaaktiviertes Bonden beziehen sich besonders auf eine Vorbehandlung der Waferoberflächen und/oder Aktivierung des Bondprozesses durch entsprechende Verfahren, z. B. Plasmavorbehandlung. Es können geringe Fügezeiten und/oder hohe mechanische Festigkeiten erreicht werden.

In einem weiteren Aspekt betrifft die Erfindung ein Verfahren zur Analyse von Gas, umfassend
a. Bereitstellung eines photoakustischen Gassensors zur Analyse von Gas gemäß einem der vorherigen Ansprüche
b. Bereitstellung eines zu analysierenden Gases im Strahlengang zwischen dem Infrarotemitter und der Detektionskammer oder innerhalb der Detektionskammer
c. Bestrahlung des zu analysierenden Gases und der Detektionskammer mit einer mit einer Modulationsfrequenz modulierten Infrarotstrahlung zur Erzeugung von Schalldruckwellen
d. Messung der erzeugten Schalldruckwellen mittels des MEMS-Sensors
e. Charakterisierung des zu analysierenden Gases anhand der Messergebnisse.

Der durchschnittliche Fachmann erkennt, dass technische Merkmale, Definitionen und Vorteile bevorzugter Ausführungsformen des erfindungsgemäßen photoakustischen Gassensors auch für das erfindungsgemäße Verfahren zur Analyse von Gas gelten.

### DETAILLIERTE BESCHREBUNG

Im Folgenden soll die Erfindung an Hand von Beispielen näher erläutert werden, ohne auf diese beschränkt zu sein.

### Kurzbeschreibunq der Abbildungen

- Abb. 1: Schematische Darstellung des Gassensors.
- Abb. 2: Gassensor mit Freistrahl-Messstrecke.
- Abb. 3: Gassensor mit Öffnung in Detektionskammer.
- Abb. 4: Gassensor mit Durchflusssensor.
- Abb. 5: Gassensor mit kapazitivem Mikrofon.
- Abb. 6: Aus zwei gebondeten Waferlagen hergestellter Gassensor.
- Abb. 7-17: Verschiedene Herstellungsschritte eines Gassensors aus zwei Waferlagen.

### Ausführliche Beschreibung der Abbildungen

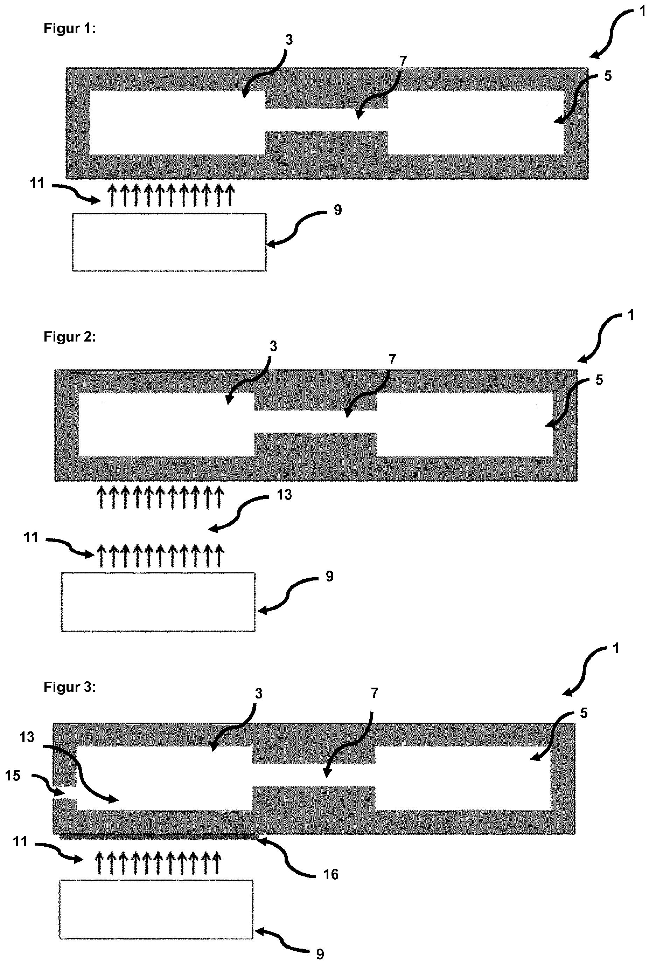

Abbildung 1 zeigt den Gassensor **1** mit der Detektionskammer **3**, der Referenzkammer **5** und dem beide Kammern verbindenden Sensorkanal **7**. Der IR-Emitter **9** ist vor der Detektionskammer **3** angeordnet. Detektionskammer **3** und Referenzkammer **5** sind lateral zueinander in einer (lateralen) Ebene angeordnet, welche senkrecht zur Strahlung **11** des IR-Emitters **9** verläuft. Detektorkammer **3** und Referenzkammer **5** werden durch einen vorzugsweise in der lateralen Ebene verlaufenden Sensorkanal **7** verbunden. Die Strahlung **11** des IR-Emitters **9** dringt dabei in die Detektorkammer **3** ein und kann dort bei Vorliegen eines entsprechenden Gases durch PAS eine Modulation des Schalldrucks erzeugen. Da ansonsten zwischen Referenzkammer **5** und Detektionskammer **3** gleiche Druckverhältnisse vorliegen, werden entstehende Schalldruckwellen durch PAS über den Sensorkanal **7** ausgeglichen, wobei dort der MEMS-Sensor (nicht gezeigt) zu ihrer Detektion vorliegt.

Abbildung 2 zeigt eine Freistrahl-Messstrecke **13** zwischen IR-Emitter **9** und Detektionskammer **3**. Die Detektionskammer **3** enthält bevorzugt ein Referenzgas, welches auf den IR-Emitter **9** dergestalt abgestimmt ist, dass in die Detektionskammer **3** eindringende, modulierte IR-Strahlung **11** eine PAS mithilfe des dortigen Gases ermöglicht. Ist nun in der Messstrecke **13** ebenfalls ein Gas enthalten, welches die IR-Strahlung **11** absorbiert (insbesondere das Referenzgas) und findet PAS statt, dann wird die Stärke der Absorption in der Detektionskammer **3** vermindert. Durch die Größe der Minderung lässt sich auf die Konzentration des Gases in der Messstrecke **13** schließen. Bevorzugt wird hierbei ein schmalbandiger IR-Emitter **9** eingesetzt, damit möglichst nur das Referenzgas angeregt werden kann.

Abbildung 3 zeigt eine Detektorkammer **3** mit einer Öffnung **15**, sodass ein den Gassensor umgebendes Gas in die Detektorkammer **3** eindringen und dort ggf. zu einer PAS angeregt werden kann. Hierdurch kann das Vorhandensein desjenigen Gases festgestellt werden. Dies beruht insbesondere darauf, dass jedes Gas nur bei mindestens einer bestimmten Wellenlänge absorbiert und somit angeregt werden kann. Dabei wird vorzugsweise ein breitbandiger IR-Emitter **9** z. B. über einen Filter **16** durchgestimmt, so dass die jeweilige Wellenlänge der IR-Strahlung **11** bekannt ist und eine durch den MEMS-Sensor detektierte Anregung somit einem bestimmten Gas zugeordnet werden kann.

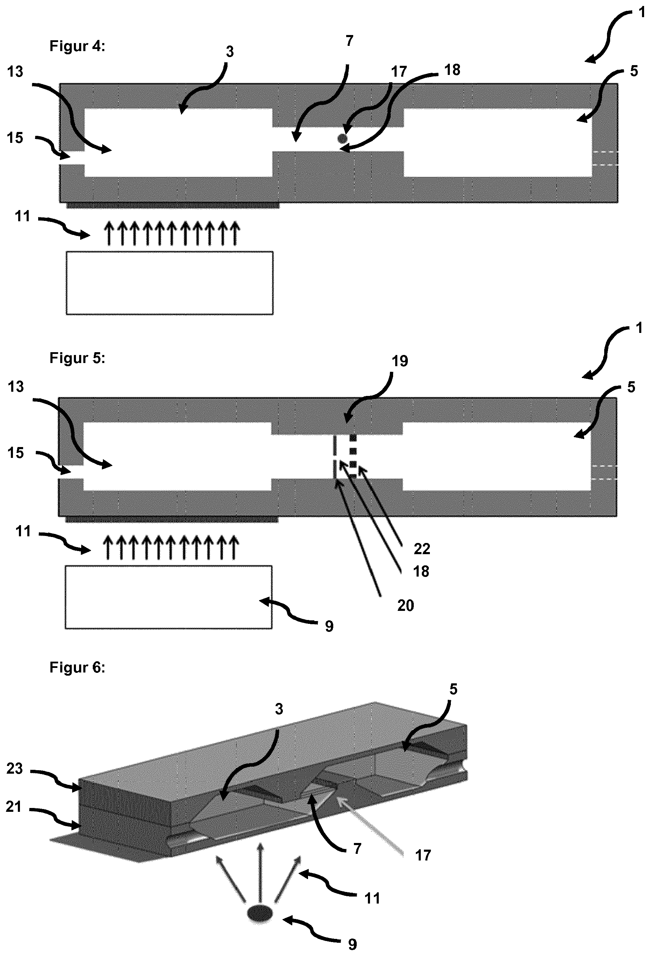

Abbildung 4 zeigt insbesondere einen MEMS-Sensor in Form eines Durchflusssensors **17** (Hitzdraht-Anemometer), welcher im Sensorkanal **7** vorliegt. Rund um den Sensor ist eine Apertur **18**, sodass das Gas den Sensorkanal **7** durchfließen kann. Die Geschwindigkeit des Durchflusses wird bevorzugt bei stattfindender PAS variiert, welche somit detektiert werden kann.

Abbildung 5 zeigt einen MEMS-Sensor in Form eines kapazitiven Mikrofons **19** umfassend eine MEMS-Membran **20.** Die MEMS-Membran weist eine Apertur **18** für einen Druckausgleich auf. So kann die Langlebigkeit der Membran gesteigert werden. Die Membran **20** fungiert vorzugsweise gleichzeitig als Elektrode, so dass Schwingungen der Membran durch Schalldruckwellen mithilfe der (MEMS-) Gegenelektrode **22** messbar gemacht werden können.

Abbildung 6 zeigt einen aus zwei gebondeten Waferlagen hergestellten Gassensor **1**. Der untere Systemwafer **21** (grau) enthält Kavitäten und das MEMS-Sensorelement. Es können ebenso lateral abgeleitete Anschlusspads für etwaige Elektronik zur Auslesung des MEMS-Sensors sowie optionale durchstimmbare IR Filter auf der Unterseite vorhanden sein. Der Wafer ist möglichst niedrig dotiert zwecks hoher IR Transparenz. Der Deckelwafer **23** (grün) enthält komplementäre Kavitäten und optionale Öffnungen im Deckel (Boden) für einen etwaigen Gasaustausch mit der Umgebungsatmosphäre des Gassensors. Beide Wafer sind vorzugsweise mittels Waferbondtechnik (ggf. hermetisch) aufeinander gebondet.

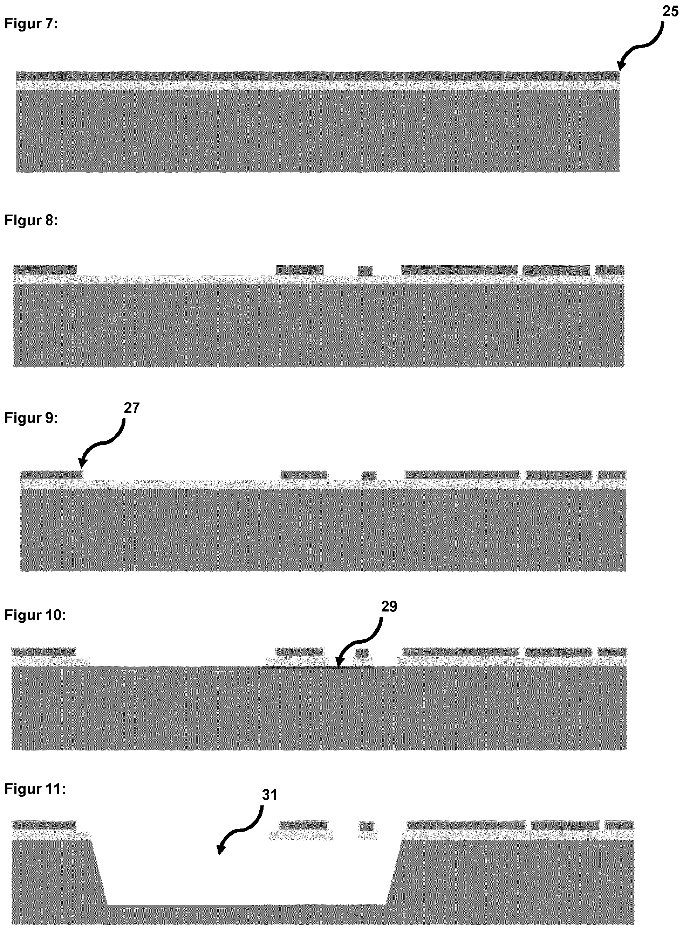

Abbildungen 7-17 zeigen verschiedene Herstellungsschritte eines Gassensors aus zwei Waferlagen. In Abbildung 7 ist ein Ausgangssubstrat für einen Systemwafer **25** gezeigt, welcher z. B. aus einem SOI (Silicon-on-insulator) Wafer/Substrat oder einen Polysilizium on Oxide Wafer/Substrat.

Abbildung 8 zeig eine erste Strukturierung der Substratoberfläche, z. B. durch Trockenätzen.

Abbildung 9 zeigt die Abdeckung des Wafers durch eine dünne Oxidschicht **27**.

In Abbildung 10 wird eine Hartmaske für eine Nassätzprozess vorbereitet. Dabei werden bestimmte Designregeln beachtet, um die gewollten Strukturen zu erlangen. Es kann bspw. eine dünne Polysiliziumschicht **29** zur Beeinflussung des Ätzprozesses verwendet werden.

Abbildung 11 zeigt die resultierende Struktur umfassend eine Kavität **31** sowie mittig angeordnete Strukturen für den MEMS-Sensor.

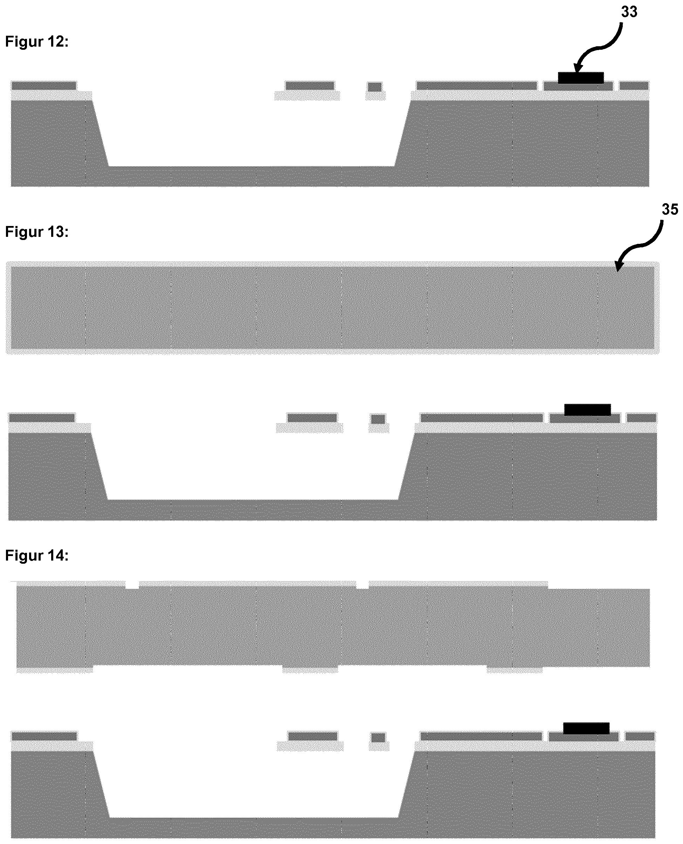

Abbildung 12 zeigt aufgebrachte Durchkontaktierung **33** für die Elektrik und Elektronik und/oder Leiterbahnen. Diese können z. B. Metall umfassen und/oder SOI bzw. Polysilizium.

Abbildung 13 zeigt ein Substrat für den Deckelwafer **35**, welcher mit einer Oxidschicht umgeben ist.

In Abbildung 14 wird dieser Deckelwafer ebenfalls für ein nasschemisches Ätzen vorstrukturiert, indem gezielt die Oxidschicht an einigen Stellen entfernt wird.

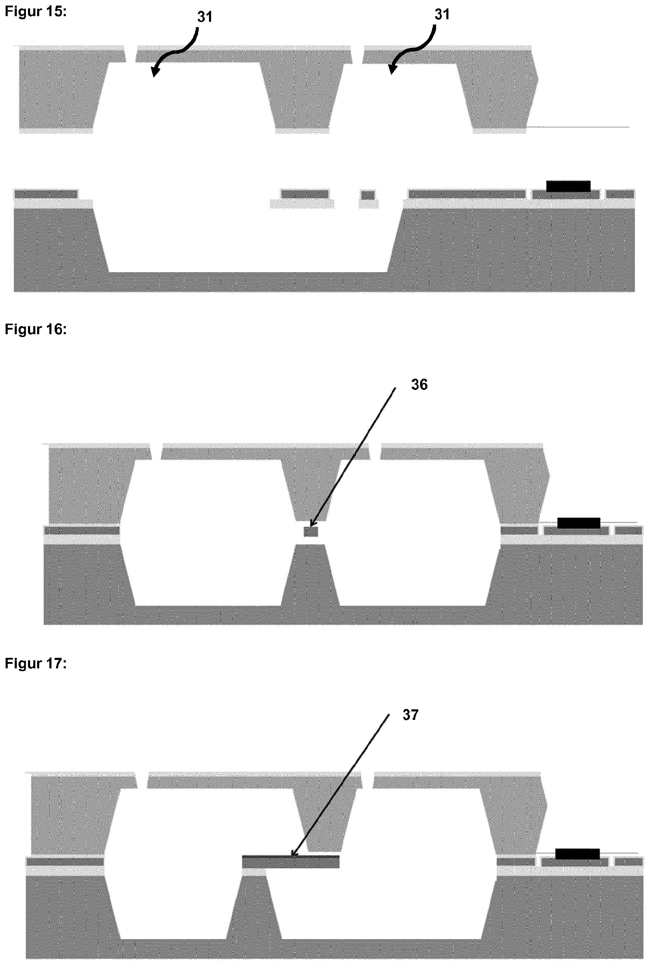

Abbildung 15 zeigt den geätzten Deckelwafer umfassend zwei Kavitäten **31**, welche zusammen mit der einen unteren Kavität Detektions- und Referenzkammer bilden können. Dies entspricht der bevorzugten Ausführungsform, bei der ein unterer Systemwafer den MEMS-Sensor sowie eine untere Kavität umfasst und ein oberer Deckelwafer zwei zu der unteren Kavität komplementäre obere Kavitäten umfasst, sodass durch Bonden des unteren Systemwafers und des oberen Deckelwafers die Referenzkammer, die Detektionskammer und der Sensorkanal gebildet werden.

Abbildung 16 zeigt die zusammengebrachten Wafer, wobei der Systemwafer nun anders strukturiert ist und zwei zu den Kavitäten des Deckelwafers korrespondierende Kavitäten aufweist. Im Sensorkanal ist ein Heizdraht für ein Anemometer **36** integriert.

Abbildung 17 zeigt dagegen einen integrierten piezoelektrischen Biegebalken **37** als MEMS-Sensor.

Abbildungen 7 bis 17 verdeutlichen somit die einfache Bauweise, welche in klassischer MEMS- bzw. Halbleiterherstellungstechnik erfolgt.

### BEZUGSZEICHENLISTE

- 1: Gassensor
- 3: Detektionskammer
- 5: Referenzkammer
- 7: Sensorkanal
- 9: IR-Emitter
- 11: IR-Strahlung
- 13: Messstrecke
- 15: Öffnung zur Detektionskammer
- 16: Durchstimmbarer Filter
- 17: Durchflusssensor
- 18: Apertur
- 19: Kapazitives Mikrofon
- 20: MEMS-Membran/Elektrode
- 21: Systemwafer
- 22: Gegenelektrode
- 23: Deckelwafer
- 25: Substrat/Wafer für Systemwafer
- 27: Oxidschicht
- 29: Polysiliziumschicht
- 31: Geätzte Kavität
- 33: Durchkontaktierung/Leiterbahn
- 35: Substrat/Wafer für Deckelwafer
- 36: Heizdraht für ein Anemometer
- 37: Piezoelektrischer Biegebalken

### LITERATURVERZEICHNIS

[1] von Huber, J.: Miniaturisierter photoakustischer Gassensor für den Nachweis von Kohlendioxid, Der Andere Verlag, 2016

## Patentansprüche

1. Photoakustischer Gassensor (1), umfassend
- einen modulierbaren Infrarot-Emitter (9),
- eine mit Gas befüllbare Detektionskammer (3),
- eine Referenzkammer (5),
- ein Sensorkanal (7), welcher die Detektionskammer (3) mit der Referenzkammer (5) verbindet sowie
- einen MEMS-Sensor, welcher sich im Sensorkanal (7) befindet,
wobei die Detektionskammer (3) im Strahlengang des Infrarot-Emitters (9) vorliegt, sodass der Infrarot-Emitter (9) mittels modulierbar emittierbarer Infrarotstrahlung (11) Gas in der Detektionskammer (3) zur Ausbildung von Schalldruckwellen anregen kann, welche mit Hilfe des MEMS-Sensors im Sensorkanal (7) detektierbar sind,
**dadurch gekennzeichnet, dass**
die Detektionskammer (3), der Sensorkanal (7), die Referenzkammer (5) sowie der MEMS-Sensor in einem mehrlagigen Substrat gebildet werden und in einer lateralen Ebene angeordnet vorliegen, welche im Wesentlichen senkrecht zur Strahlungsrichtung des IR-Emitters (9) verläuft.

2. Photoakustischer Gassensor (1) gemäß dem vorherigen Anspruch
**dadurch gekennzeichnet, dass**
die Referenzkammer (3) und der Sensorkanal (7) mit dem MEMS-Sensor nicht im Strahlengang des Infrarot-Emitters vorliegen (9).

3. Photoakustischer Gassensor (1) gemäß einem der vorherigen Ansprüche
**dadurch gekennzeichnet, dass**
das mehrlagige Substrat mindestens zwei Substratlagen umfasst ausgewählt aus der Gruppe bestehend aus monokristallinem Silizium, Polysilizium, Siliziumdioxid, Siliziumcarbid, Siliziumgermanium, Siliziumnitrid, Nitrid, Germanium, Kohlenstoff, Galliumarsenid, Galliumnitrid, Indiumphosphid und Glas.

4. Photoakustischer Gassensor (1) gemäß einem der vorherigen Ansprüche
**dadurch gekennzeichnet, dass**
das mehrlagige Substrat durch Bonden mindestens zweier Wafer gebildet wird, wobei bevorzugt ein unterer Systemwafer (21) den MEMS-Sensor umfasst sowie mindestens zwei untere Kavitäten (31) und ein oberer Deckelwafer (23) zu den unteren Kavitäten (31) komplementäre obere Kavitäten (31) aufweist, sodass durch Bonden des unteren Systemwafers (21) und des oberen Deckelwafers (21) die Referenzkammer (5) und Detektionskammer (3) gebildet werden.

5. Photoakustischer Gassensor (1) gemäß einem der vorherigen Ansprüche
**dadurch gekennzeichnet, dass**
die Detektorkammer (3) und/oder die Referenzkammer (5) eine Höhe von 10 µm bis 2 mm, bevorzugt von 50 µm bis 1 mm, besonders bevorzugt von 100 µm bis 500 µm aufweist und/oder
die Detektorkammer (3) und/oder die Referenzkammer (5) eine Länge oder Breite von 100 µm bis 5 mm, bevorzugt von 200 µm bis 3 mm, besonders bevorzugt von 500 µm bis 2mm aufweist.

6. Photoakustischer Gassensor (1) gemäß einem der vorherigen Ansprüche
**dadurch gekennzeichnet, dass**
der Sensorkanal (7) eine Länge von 1 µm bis 500 µm, bevorzugt von 10 µm bis 200 µm, besonders bevorzugt von 10 µm bis 100 µm aufweist,
und/oder der Sensorkanal (7) einen Querschnitt von 1 µm² bis 250 000 µm², bevorzugt, von 100 µm² bis 25 000 µm² aufweist. Photoakustischer Gassensor (1) gemäß einem der vorherigen Ansprüche
**dadurch gekennzeichnet, dass**
der MEMS-Sensor ein Schalldruckdetektor ist, wobei der Schalldruckdetektor bevorzugt einen kapazitiv oder optisch auslesbaren, piezoelektrischen, piezoresistiven und/oder magnetischen Balken und/oder ein kapazitives (19), piezoelektrischen, piezoresistives und/oder optisches Mikrofon umfasst.

7. Photoakustischer Gassensor (1) gemäß einem der vorherigen Ansprüche
**dadurch gekennzeichnet, dass**
der MEMS-Sensor ein kapazitives Mikrofon (19 ist, umfassend eine MEMS-Membran (20) als Elektrode sowie eine Gegenelektrode (22) und wobei die MEMS-Membran (20) bevorzugt eine maximale Ausdehnung in mindestens eine Richtung aufweist von 100 µm bis 1500 µm, insbesondere 200 bis 1000 µm

8. Photoakustischer Gassensor (1) gemäß einem der vorherigen Ansprüche
**dadurch gekennzeichnet, dass**
der MEMS-Sensor ein Durchflusssensor (17) ist, bevorzugt ein thermischer Durchflusssensor, ein Hitzedraht-Anemometer, ein thermoelektrisches Anemometer ein resistives Anemometer und/oder ein Ultraschallanemometer umfasst,
wobei das Durchflusssensor (17) bevorzugt in dem Sensorkanal (7) vorliegt und eine Apertur (18) bildet, welche bevorzugt eine maximale Ausdehnung in mindestens eine Richtung von 100 µm bis 1500 µm, insbesondere von 200 µm bis 1000 µm aufweist.

9. Photoakustischer Gassensor (1) gemäß einem der vorherigen Ansprüche
**dadurch gekennzeichnet, dass**
die Detektorkammer (3), der Sensorkanal (7) und die Referenzkammer (5) ein geschlossenes System bilden, welches mit einem Referenzgas gefüllt ist und ein zu analysierendes Gas im Strahlengang zwischen dem Infrarotemitter (9) und der Detektionskammer (3) vorliegt, sodass der Anteil des Referenzgases im zu analysierenden Gas anhand der Ausbildung von Schalldruckwellen in der Detektionskammer (3) messbar ist.

10. Photoakustischer Gassensor (1) gemäß einem der vorherigen Ansprüche
**dadurch gekennzeichnet, dass**
die Detektionskammer (3) ein offenes System darstellt, welches eine oder mehrere Öffnungen (15) aufweist, sodass ein zu analysierendes Gas in die Detektionskammer (3) einströmen oder diffundieren kann,
wobei es bevorzugt ist, dass die Detektionskammer (3) zwei oder mehr Öffnungen (15) aufweisen mit einer maximalen Ausdehnung in mindestens eine Richtung von 1 nm bis 500 µm.

11. Photoakustischer Gassensor (1) gemäß einem der vorherigen Ansprüche
**dadurch gekennzeichnet, dass**
der Infrarotemitter (9) eine wellenlängenselektive Abstrahlung erlaubt und/oder im Strahlengang zwischen dem Infrarotemitter und der Detektionskammer ein wellenlängenselektiver Filter (16), beispielsweise eine Fabry-Perot-Filter, vorliegt.

12. Verfahren zur Herstellung eines photoakustischen Gassensors (1) gemäß einem der vorherigen Ansprüche umfassend die Schritte
- Bereitstellen mindestens zweier Substratlagen
- Aufbringen mindestens einer Lage eines leitfähigen Materials auf einer ersten Substratlage und/oder Strukturierung eines leitfähigen Materials auf der ersten Substratlage zur Bildung eines MEMS-Sensors
- Ätzen von Kavitäten (31) in der ersten und/oder zweiten Substratlage
- Verbinden der ersten Substratlage mit der zweiten Substratlage zur Bildung der Detektionskammer (3), der Referenzkammer (5) und des Sensorkanals (7), wobei der Sensorkanal (7) die Detektionskammer (3) mit der Referenzkammer (5) verbindet und in dem Sensorkanal (7) der MEMS-Sensor integriert vorliegt.

13. Herstellungsverfahren gemäß dem vorherigen Anspruch
**dadurch gekennzeichnet, dass**
- ein Ätzen und/oder eine Strukturierung ausgesucht ist aus der Gruppe umfassend Trockenätzen, nasschemisches Ätzen und/oder Plasmaätzen, insbesondere Reaktives lonenätzen, Reaktives lonentiefenätzen (Bosch-Prozess);
- das Aufbringen ausgesucht ist aus der Gruppe umfassend physikalische Gasphasenabscheidung (PVD), insbesondere thermisches Verdampfen, Laserstrahlverdampfen, Lichtbogenverdampfen, Molekularstrahlepitaxie, Sputtern, chemische Gasphasenabscheidung (CVD) und/oder Atomlagenabscheidung (ALD) und/oder
- das Verbinden der Substratlagen ausgesucht ist aus der Gruppe umfassend Waferbonden, Direktbonden, Oberflächenaktiviertes Bonden, Plasmaaktiviertes Bonden, Anodisches Bonden, Eutetkisches Bonden, Schweiß-Bonden, Glas-Frit-Bonden und/oder Adhäsives Bonden.

14. Verfahren zur Analyse von Gas, umfassend
a. Bereitstellung eines photoakustischen Gassensors (1) zur Analyse von Gas gemäß einem der vorherigen Ansprüche 1-11
b. Bereitstellung eines zu analysierenden Gases im Strahlengang zwischen dem Infrarotemitter (9) und der Detektionskammer (3) oder innerhalb der Detektionskammer (3)
c. Bestrahlung des zu analysierenden Gases und der Detektionskammer (3) mit einer mit einer Modulationsfrequenz modulierten Infrarotstrahlung (11) zur Erzeugung von Schalldruckwellen
d. Messung der erzeugten Schalldruckwellen mittels des MEMS-Sensors
e. Charakterisierung des zu analysierenden Gases anhand der Messergebnisse.
